# EUROPEAN PATENT APPLICATION

(11) **EP 4 841 925 A1**
(43) Date of publication of application: **18.11.2026**
(21) Application number: 25747745.5
(22) Date of filing: 23.01.2025
(51) Int. Cl.: H04L 5/00

(54) **COMMUNICATION METHOD AND RELATED APPARATUS**

(30) Priority: 31.01.2024 CN 202410139069
(71) Applicant: Huawei Technologies Co., Ltd., Shenzhen, Guangdong 518129 (CN)
(72) Inventor: CHEN, Ying, Shenzhen, Guangdong 518129 (CN); WANG, Jun, Shenzhen, Guangdong 518129 (CN)
(74) Representative: Huawei European IPR
(86) International application number: PCT/CN2025/074263
(87) International publication number: WO 2025/162176

(57) **Abstract**

This application provides a communication method and a related apparatus, applied to the field of communication technologies. The method includes: receiving a first message, where the first message indicates a first preamble sequence and/or a second preamble sequence; and sending the first preamble sequence or the second preamble sequence on a first random access resource, where the first random access resource is associated with a first preconfigured uplink resource PUR. In embodiments of this application, a probability of communication between a terminal and a network device can be effectively ensured.

## Description

This application claims priority to Chinese Patent Application No. 202410139069.6, filed with the China National Intellectual Property Administration on January 31, 2024 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

In comparison with terrestrial communication, satellite communication has unique advantages. For example, the satellite communication can provide a wider coverage range, and satellite base stations are not vulnerable to natural disasters or external forces. Introduction of the satellite communication can provide communication services for some areas that cannot be covered by a terrestrial communication network, such as oceans and forests; enhance communication reliability, for example, by ensuring that airplanes, trains, and users on these transportation vehicles obtain better communication services; and provide more data transmission resources for communication, to increase a network rate. Therefore, supporting both the terrestrial communication and the satellite communication provides great benefits in terms of wide coverage, reliability, multi-connection, high throughput, and the like.

Currently, the satellite communication has been introduced into 3rd generation partnership project (3rd generation partnership project, 3GPP) standards as a communication scenario in 5th generation (5th generation, 5G) communication, and is referred to as a non-terrestrial network (non-terrestrial network, NTN). The NTN not only supports various 5G terminals, but also supports narrowband internet of things (narrowband internet of things, NB-IoT) terminals and other types of terminals. Most significant features of the satellite communication are high mobility and large communication latency, and terminals need to perform frequent beam switching and cell handover due to satellite movement. To address an issue of frequent initiation of contention-based random access, in some solutions, NB-IoT performs data transmission in an idle state by using a preconfigured uplink resource (preconfigured uplink resource, PUR). However, a PUR periodicity is relatively long, and a minimum PUR periodicity may reach tens of seconds, whereas validity duration of timing advance command (timing advance, TA), except for infinite duration, is at most 10.24 seconds, which is shorter than a PUR periodicity. As a result, in the satellite communication scenario, a TA is prone to expiration, and consequently, the terminal needs to fall back to a normal random access procedure.

Therefore, how to address an issue that a TA for a PUR is prone to expiration in the satellite communication scenario is an urgent problem to be resolved by a person skilled in the art.

### SUMMARY

Embodiments of this application provide a communication method and a related apparatus, to effectively ensure a probability of communication between a terminal and a network device.

**According to a first aspect,** an embodiment of this application provides a communication method. The method includes: receiving a first message, where the first message indicates a first preamble sequence and/or a second preamble sequence; and sending the first preamble sequence or the second preamble sequence on a first random access resource, where the first random access resource is associated with a first preconfigured uplink resource PUR.

For a same TA, when validity duration of the TA expires, a terminal typically falls back to a normal random access procedure. However, in this application, the terminal may send the first preamble sequence or the second preamble sequence before sending data on the first PUR, and then adjust a sending moment of the data based on a TA indicated by a second message. In this way, even if the validity duration of the TA expires, the terminal can also continue to communicate with a network device, to reduce a probability that the terminal falls back to the normal random access procedure. For a conventional technology, when the validity duration of the TA expires, the network device may not receive data from the terminal. However, in this application, the terminal sends a preamble sequence before sending data. Even if the validity duration of the TA expires, the network device can also receive the data from the terminal in a timely manner, so that the network device effectively demodulates the data.

In conclusion, according to this application, a probability of communication between the terminal and the network device can be effectively ensured.

**In a possible implementation of the first aspect**, the first random access resource is one of N random access resources, the N random access resources are random access resources within a first time period before the first PUR, and N is a positive integer greater than or equal to 1.

In the foregoing implementation, the terminal selects one random access resource from the N random access resources within the first time period before the first PUR, so that the terminal can select a random access resource more flexibly.

**In still another possible implementation of the first aspect**, the sending the first preamble sequence or the second preamble sequence on the first random access resource includes: if a timing advance command TAC will expire in a next transmission periodicity, sending the first preamble sequence or the second preamble sequence on the first random access resource.

In the foregoing implementation, the first preamble sequence or the second preamble sequence is sent on the first random access resource only when validity duration of the TAC will expire in the next transmission periodicity, so that sending of the preamble sequence is more targeted. In addition, when the validity duration of the TAC expires in the next transmission periodicity, data transmission on the first random access resource can also be supported, thereby effectively ensuring the communication between the terminal and the network device.

**In still another possible implementation of the first aspect**, the first message indicates the N random access resources.

**In still another possible implementation of the first aspect**, when data is to be sent, the first preamble sequence or the second preamble sequence is sent on the first random access resource; or when no data is to be sent, the second preamble sequence is sent on the first random access resource.

In the foregoing implementation, because the terminal does not necessarily need to send data on all random access resources, if the terminal does not need to send data on several random access resources, and the network device does not need to send a feedback message to the terminal, it is very likely that the validity duration of the TA for the terminal has expired within this time period. Therefore, to prevent the terminal from falling back to the normal random access procedure, the network device may indicate the terminal to send a preamble sequence when data is to be sent or when no data is to be sent, but may indicate, by using different sequences, that preamble sequences used by the terminal when data is to be sent or when no data is to be sent are different, so that the network device can determine whether the terminal sends data.

Optionally, the TA is determined based on the first preamble sequence or the second preamble sequence.

**In still another possible implementation of the first aspect**, the first message is carried in signaling of a narrowband physical downlink control channel (NPDCCH) or in a radio resource control (radio resource control, RRC) release message.

Optionally, activation information indicates that the first preamble sequence can be transmitted on a random access resource within the first time period before the first random access resource, or indicates that the first preamble sequence can be transmitted on a preset quantity of random access resources before the first random access resource.

**In still another possible implementation of the first aspect**, the first message indicates a plurality of preamble sequences, and the first preamble sequence or the second preamble sequence is one of the plurality of preamble sequences; and the method further includes: determining the first preamble sequence or the second preamble sequence from the plurality of preamble sequences.

In the foregoing implementation, the terminal may select a preamble sequence from a plurality of preamble sequences configured by the network device, either randomly or based on a requirement of the terminal, so that preamble sequence selection is more flexible.

**In still another possible implementation of the first aspect**, the determining the first preamble sequence or the second preamble sequence from the plurality of preamble sequences includes:
receiving a first indication message, where the first indication message indicates the first preamble sequence or the second preamble sequence.

In the foregoing implementation, when the network device configures the plurality of preamble sequences, the terminal may initiate non-contention-based random access based on the preamble sequence indicated by the first message.

**In still another possible implementation of the first aspect**, the first indication message includes an index of the first preamble sequence .

If the index of the first preamble sequence or an index of the second preamble sequence is a first index value, the first preamble sequence or the second preamble sequence indicated by the first message is a most recently used preamble sequence.

In the foregoing implementation, a specific state set by the network device may indicate that the terminal may still use a last used preamble sequence.

**In still another possible implementation of the first aspect**, the second message is received, where the second message indicates the timing advance TA.

**In still another possible implementation of the first aspect**, the first message further includes an adjustment range of the TA.

Optionally, the adjustment range of the TA indicates a format of the TA.

Optionally, the adjustment range of the TA is a range greater than or equal to 0, or the adjustment range of the TA is an interval ranging from a negative value to a positive value.

Optionally, if the timing advance command TAC will not expire in the next transmission periodicity, the data is retransmitted or new data is transmitted on the PUR within the adjustment range of the TA.

**According to a second aspect**, an embodiment of this application provides a communication method, where the method includes: sending a first message, where the first message indicates a first preamble sequence and/or a second preamble sequence; and receiving the first preamble sequence or the second preamble sequence on a first random access resource, where the first random access resource is associated with a first preconfigured uplink resource PUR.

For a same TA, when validity duration of the TA expires, a terminal typically falls back to a normal random access procedure. However, in this application, the terminal may send the first preamble sequence or the second preamble sequence before sending data on the first PUR, and then adjust a sending moment of the data based on a TA indicated by a second message. In this way, even if the validity duration of the TA expires, the terminal can also continue to communicate with a network device, to reduce a probability that the terminal falls back to the normal random access procedure. For a conventional technology, when the validity duration of the TA expires, the network device may not receive data from the terminal. However, in this application, the terminal sends a preamble sequence before sending data. Even if the validity duration of the TA expires, the network device can also receive the data from the terminal in a timely manner, so that the network device effectively demodulates the data.

In conclusion, according to this application, a probability of communication between the terminal and the network device can be effectively ensured.

**In a possible implementation of the second aspect**, the first random access resource is one of N random access resources, the N random access resources are random access resources within a first time period before the first PUR, and N is a positive integer greater than or equal to 1.

**In still another possible implementation of the second aspect**, the first message indicates the N random access resources.

**In still another possible implementation of the second aspect**, the first preamble sequence is used when data is to be sent, and the second preamble sequence is used when no data is to be sent.

**In still another possible implementation of the second aspect**, the first message is carried in signaling of an NPDCCH or in an RRC release message.

**In still another possible implementation of the second aspect**, the first message indicates a plurality of preamble sequences, and the first preamble sequence or the second preamble sequence is one of the plurality of preamble sequences; and the method further includes: sending a first indication message, where the first indication message indicates the first preamble sequence or the second preamble sequence.

**In still another possible implementation of the second aspect**, the first indication message includes an index of the first preamble sequence or an index of the second preamble sequence. If the index of the first preamble sequence or the index of the second preamble sequence is a first index value, the first preamble sequence or the second preamble sequence indicated by the first message is a most recently used preamble sequence.

**In still another possible implementation of the second aspect**, the second message is sent, where the second message indicates the timing advance TA, and the TA is obtained based on the first preamble sequence or the second preamble sequence.

**In still another possible implementation of the second aspect**, the first message further includes an adjustment range of the TA.

**According to a third aspect,** an embodiment of this application provides a communication apparatus. The communication apparatus includes a module or a unit configured to implement the method according to any one of the first aspect or the possible implementations of the first aspect.

**According to a fourth aspect,** an embodiment of this application provides a communication apparatus. The communication apparatus includes a module or a unit configured to implement the method according to any one of the second aspect or the possible implementations of the second aspect.

**According to a fifth aspect,** an embodiment of this application provides a communication apparatus. The communication apparatus includes at least one processor and a communication interface. The communication interface is configured to input and/or output information, and the at least one processor is configured to invoke a computer program stored in at least one memory, to implement the method according to any one of the first aspect or the implementations of the first aspect.

**According to a sixth aspect,** an embodiment of this application provides a communication apparatus. The communication apparatus includes at least one processor and a communication interface. The communication interface is configured to input and/or output information, and the at least one processor is configured to invoke a computer program stored in at least one memory, to implement the method according to any one of the second aspect or the implementations of the second aspect.

**According to a seventh aspect,** this application provides a chip. The chip includes modules or units in the method according to any one of implementations of the first aspect and the second aspect. The module may be a software module or a hardware module.

**According to an eighth aspect,** an embodiment of this application provides a communication system. The communication system includes a terminal and a network device, and the terminal is communicatively connected to the network device. The terminal is configured to implement the method according to any one of implementations of the first aspect, or is configured to implement the method according to any one of implementations of the second aspect. The network device is configured to implement the method according to any one of implementations of the first aspect, or is configured to implement the method according to any one of implementations of the second aspect.

**According to a ninth aspect,** an embodiment of this application provides a computer-readable storage medium. The computer-readable storage medium is configured to store instructions or a computer program. When the instructions or the computer program is executed, the method according to any one of implementations of the first aspect is implemented, or the method according to any one of implementations of the second aspect is implemented.

**According to a tenth aspect,** this application provides a computer program product. The computer program product includes computer instructions. When the instructions are run on at least one processor, the method according to any one of the first aspect and the second aspect or the possible implementations of the first aspect and the second aspect may be implemented. The computer program product may be a software installation package. When the foregoing method needs to be used, the computer program product may be downloaded, and the computer program product may be executed on a compute device.

For beneficial effects of the technical solutions provided in the third aspect to the tenth aspect of this application, refer to the beneficial effects of the technical solutions in the first aspect and the second aspect. Details are not described herein again.

### BRIEF DESCRIPTION OF DRAWINGS

FIG. 1 is a diagram of an architecture of a communication system according to an embodiment of this application;
FIG. 2a is a diagram of a communication system in a transparent transmission scenario according to an embodiment of this application;
FIG. 2b and FIG. 2c are diagrams of communication systems in a regenerative scenario according to an embodiment of this application;
FIG. 3 is a schematic flowchart of a communication method according to an embodiment of this application;
FIG. 4 is a diagram of a format of signaling of an NPDCCH according to an embodiment of this application;
FIG. 5 is a diagram of a structure of a communication apparatus 50 according to an embodiment of this application;
FIG. 6 is a diagram of a structure of another communication apparatus 60 according to an embodiment of this application; and
FIG. 7 is a diagram of a structure of still another communication apparatus 70 according to an embodiment of this application.

### DESCRIPTION OF EMBODIMENTS

For ease of understanding technical solutions in this application, the following further describes this application with reference to the accompanying drawings.

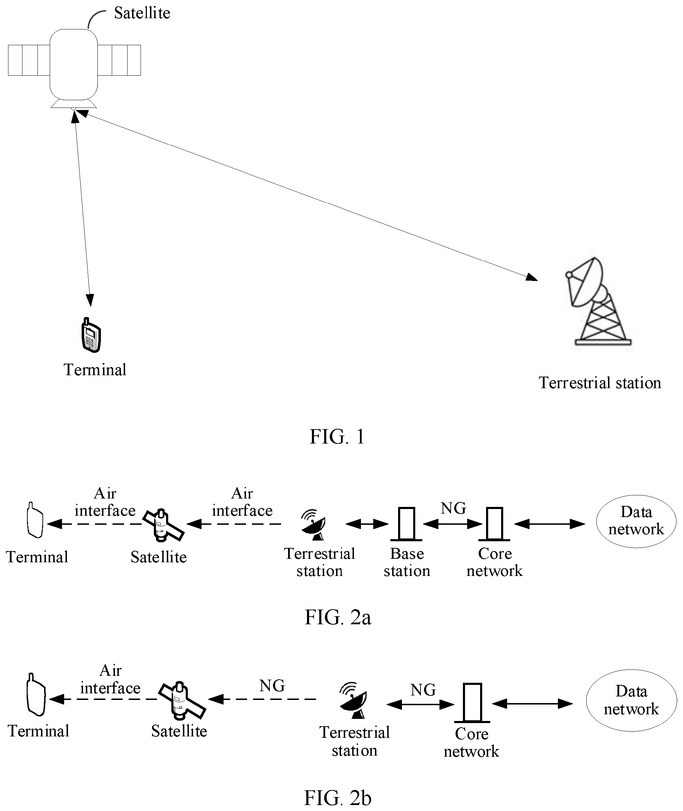

A method provided in embodiments of this application may be applied to a non-terrestrial network (non-terrestrial network, NTN) communication system. As shown in FIG. 1, the communication system may include a terminal device, a satellite, and a terrestrial station (which may also be referred to as a gateway station). It may be understood that FIG. 1 shows only one satellite and one terrestrial station. In actual use, an architecture with a plurality of satellites and/or a plurality of terrestrial stations may be used based on a requirement. Each satellite may provide a service for one or more terminal devices, each satellite may correspond to one or more terrestrial stations, each terrestrial station may correspond to one or more satellites, and the like. This is not specifically limited in embodiments of this application. The method provided in embodiments of this application may be applied to an internet of things (internet of things, IoT) system, an internet of vehicles (Vehicle-to-X, V2X) system, and a narrowband internet of things (narrowband internet of things, NB-IoT) system. For another example, the method may be applied to an LTE frequency division duplex (frequency division duplex, FDD) system, an LTE time division duplex (time division duplex, TDD) system, a long term evolution (long term evolution, LTE) system, a 5th generation (5th generation, 5G) communication system, a future communication system, or the like. This is not specifically limited in embodiments of this application.

A terminal is an apparatus having a wireless transceiver function. The terminal may communicate with an access network device (also referred to as an access device) in a radio access network (radio access network, RAN). The terminal (terminal) may also be referred to as a user equipment (user equipment, UE), an access terminal, a subscriber unit (subscriber unit), a subscriber station, a mobile station, a remote station, a remote terminal, a mobile device, a user terminal, a user agent, a user apparatus, or the like. In a possible implementation, the terminal may be deployed on land, including an indoor or outdoor terminal, and a handheld or vehicle-mounted terminal; or may be deployed on water (for example, on a ship). In a possible implementation, the terminal may be a handheld device, a vehicle-mounted device, a wearable device, a sensor, a terminal in an internet of things, a terminal in an internet of vehicles, an uncrewed aerial vehicle, a terminal in any form in a 5th generation (5th generation, 5G) network or a future network, or the like that has a wireless communication function. This is not limited in embodiments of this application. For example, communication may further be performed between terminals through device-to-device (device-to-device, D2D), machine-to-machine (machine-to-machine, M2M), or the like. The terminal shown in embodiments of this application may alternatively be a device in the internet of things (internet of things, IoT). The IoT network may include, for example, the internet of vehicles. Communication modes in the internet of vehicles system are collectively referred to as vehicle-to-everything (vehicle-to-X, V2X, where X may stand for anything). For example, the V2X may include: vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, vehicle-to-network (vehicle-to-network, V2N) communication, or the like.

The terrestrial station may be configured to connect a satellite to a base station, or a satellite to a core network. The satellite may provide a radio access service for a terminal, schedule a radio resource to an accessed terminal, and provide a reliable radio transmission protocol, a data encryption protocol, and the like. In an example, the satellite may be an artificial earth satellite, a high-altitude aircraft, or the like that is used as a wireless communication base station, for example, an evolved NodeB (evolved NodeB, eNB) and a next generation NodeB (next generation NodeB, gNB). In another example, the satellite may alternatively serve as a relay of these base stations, and transparently transmit signals of these base stations to the terminal.

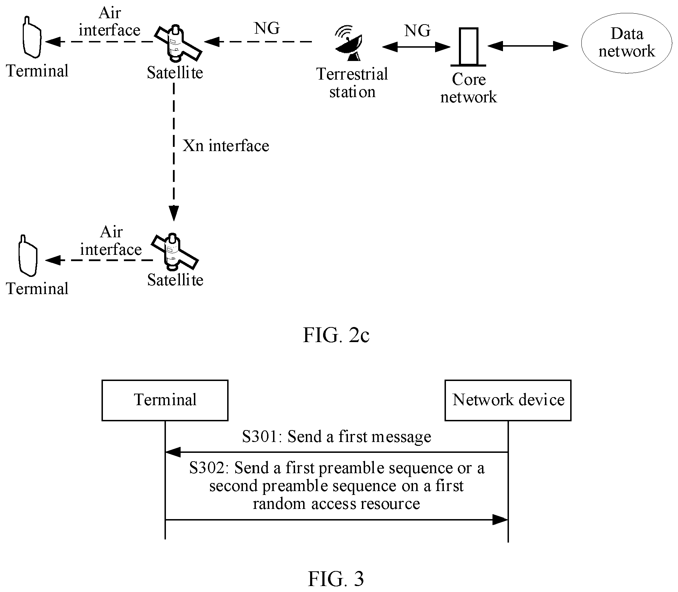

Therefore, in some implementations of this application, for example, in a satellite transparent transmission scenario, a network device may be the base station (which may also be referred to as a terrestrial base station) shown in FIG. 1. FIG. 2a is a diagram of a communication system in a transparent transmission scenario according to an embodiment of this application. For example, a terminal may access a network through an air interface (where the air interface may be various types of air interfaces, for example, a 5G air interface), and a network device may be deployed on a terrestrial base station. A satellite is connected to a terrestrial station through a radio link. The terrestrial station and the terrestrial base station are connected to a core network in a wired or wireless manner. A radio link may exist between satellites. In the system shown in FIG. 2a, the satellite may have a transparent transmission and forwarding function. In some other implementations of this application, for example, in a regenerative scenario of the satellite, the network device may be the satellite shown in FIG. 1. FIG. 2b is a diagram of a communication system in a regenerative scenario according to an embodiment of this application. For example, a terminal may access a network through an air interface (where the air interface may be various types of air interfaces, for example, a 5G air interface), and a network device may be deployed on a satellite (for example, in a regenerative mode of the satellite). For example, a base station or a part of functions of the base station are deployed on the satellite, and signaling exchange and user data transmission between base stations may be completed between satellites, as shown in FIG. 2c.

For example, network elements and interfaces between the network elements in FIG. 2a to FIG. 2c may be shown as follows.

The terminal may access a satellite network through the air interface and initiate services such as calls and network access. The base station may be configured to provide a radio access service, schedule a radio resource to an accessed terminal device, and provide a reliable radio transmission protocol, a data encryption protocol, and the like. The terrestrial station may be configured to be responsible for forwarding signaling and service data between the satellite and the core network. The core network may be configured for user access control, mobility management, session management, user security authentication, charging, or the like. The core network may include a plurality of functional units, for example, functional entities including a control plane and a data plane. For example, the core network shown in FIG. 2a to FIG. 2c may include an access and mobility management function (access and mobility management function, AMF), a session management function (session management function, SMF), a user plane function (user plane function, UPF), and the like. For example, the AMF may be configured to be responsible for user access management, security authentication, mobility management, and the like. The UPF may be configured to be responsible for managing user plane data transmission, traffic statistics collection, and the like. The air interface shown in FIG. 2a to FIG. 2c may be understood as a radio link between the terminal and the base station, or a radio link between the satellite and the terrestrial station. An Xn interface may be understood as an interface between base stations, and is mainly configured to exchange signaling such as handover. An NG interface may be used as an interface between the base station and the core network, and is configured to exchange signaling such as non-access stratum (non-access stratum, NAS) signaling of the core network and service data of a user. In systems using different radio access technologies, names of devices having a base station function may be different, and are not shown one by one in embodiments of this application.

The satellite may be a geostationary earth orbit (geostationary earth orbit, GEO) satellite, a medium earth orbit (medium earth orbit, MEO) satellite or a low earth orbit (low earth orbit, LEO) satellite in a non-geostationary earth orbit (non-geostationary earth orbit, NGEO), a high-altitude platform station (high-altitude platform station, HAPS), or the like. A specific type of the satellite is not limited in embodiments of this application.

In some deployments of the network device, the network device may include a central unit (central unit, CU) and a distributed unit (distributed unit, DU). In some other deployments of the network device, the CU may further include a CU-control plane (control plane, CP) and a CU-user plane (user plane, UP). In still some other deployments of the network device, the network device may alternatively be of an open radio access network (open radio access network, ORAN) architecture or the like. A specific deployment manner of the network device is not limited in embodiments of this application. For example, when the network device is of the ORAN architecture, the network device in embodiments of this application may be an access network device in an ORAN, a functional module, or the like. In an ORAN system, the CU may also be referred to as an open (open, O)-CU, the DU may also be referred to as an O-DU, the CU-CP may also be referred to as an O-CU-CP, the CU-UP may also be referred to as an O-CU-UP, and the like. The deployment manner of the network device listed herein is merely an example. With evolution of a standard technology, the network device may have another deployment manner.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that with the evolution of the network architecture and the emergence of new service scenarios, the technical solutions and the network architecture provided in embodiments of this application are also applicable to similar technical problems.

Most significant features of satellite communication are high mobility and large communication latency. To address an issue of frequent initiation of contention-based random access, in some solutions, NB-IoT performs data transmission in an idle state by using a PUR. However, a PUR periodicity is relatively long, and a minimum PUR periodicity may reach tens of seconds, whereas validity duration of timing advance command, except for infinite duration, is at most 10.24 seconds, which is shorter than a PUR periodicity. As a result, in the satellite communication scenario, a TA is prone to expiration, and consequently, the network device may fail to receive data sent by the terminal, so that the terminal needs to fall back to a normal random access procedure.

In view of this, embodiments of this application provide a communication method and a related apparatus. A preamble sequence is sent before data is sent on each PUR, to ensure that a terminal can also effectively communicate with a network device even if validity duration of a TA expires subsequently. This ensures a probability that the network device effectively receives data sent by the terminal, reduces a probability that the terminal falls back to the normal random access procedure, or enables the network device to demodulate data effectively.

In the following communication method (as shown in FIG. 3), for detailed descriptions of the terminal and the network device, refer to FIG. 1 and FIG. 2a to FIG. 2c. Details are not described herein again. For ease of description, the terminal and the network device may be used as an example for description in specific examples in embodiments of this application, but this should not be construed as a limitation on embodiments of this application.

The following describes embodiments of this application in detail with reference to accompanying drawings.

FIG. 3 is a schematic flowchart of a communication method according to an embodiment of this application. Optionally, the method may be applied to a communication system, for example, the communication systems shown in FIG. 1 and FIG. 2a to FIG. 2c. The communication method shown in FIG. 3 may include step S301 and/or step S302. It should be understood that, herein for ease of description, a sequence of step S301 and step S302 is used for description, and it is not intended to limit the steps to be performed in the sequence. A sequence of performing the foregoing one or more steps, time of performing the foregoing one or more steps, a quantity of times of performing the foregoing one or more steps, and the like are not limited in embodiments of this application. Step S301 and step S302 are specifically as follows.

**Step S301:** A network device sends a first message.

Optionally, the network device sends the first message to a terminal.

Correspondingly, the terminal receives the first message from the network device.

The first message is an example name used to distinguish a message. For example, the first message may indicate a first preamble sequence, a second preamble sequence, or another preamble sequence. A preamble sequence is a series of signals sent by a terminal before the terminal sends actual content (for example, valid service data) on a physical random access channel. After the preamble sequence is sent, the terminal may immediately send the valid service data.

**In a possible implementation,** the first message is carried in signaling of an NPDCCH.

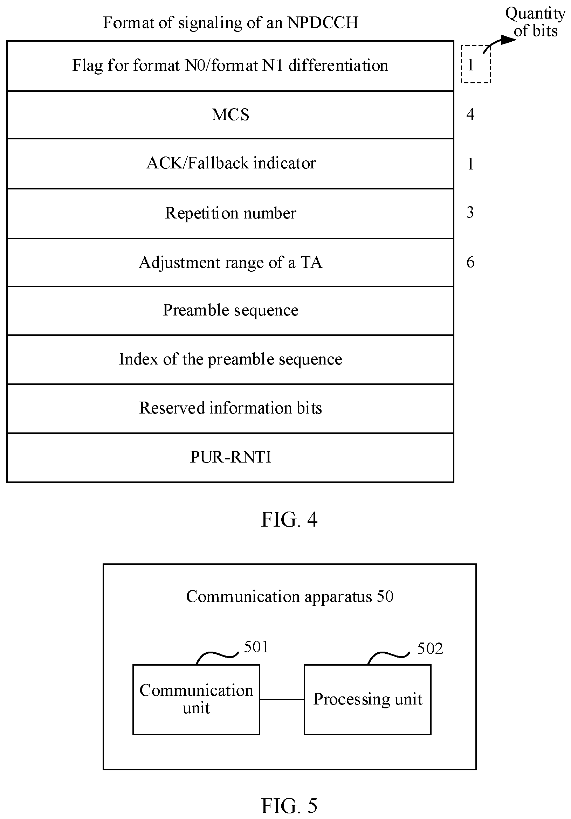

For example, FIG. 4 is a diagram of a format of signaling of an NPDCCH according to an embodiment of this application. As shown in FIG. 4, the signaling of the NPDCCH may include one or more of the following information:
(1) Flag for format N0/format N1 differentiation, which indicates that the format is N0 or N1. For example, the flag for format N0/format N1 differentiation field is represented by one bit;
(2) Modulation and coding scheme (modulation and coding scheme, MCS), which indicates different index values. For example, the modulation and coding scheme field is represented by four bits;
(3) Acknowledgement (acknowledgement, ACK) or fallback indicator. In data communication, this refers to a transmission control character sent from a receiver end to a transmitter end. The acknowledgement field acknowledges that data sent by the transmitter has been correctly received. For example, the acknowledgement field is represented by one bit. The fallback indicator indicates falling back to a normal random access procedure. For example, the fallback field is represented by one bit;
(4) Repetition number (repetition number), which indicates a quantity of times a narrowband physical uplink shared channel (NPUSCH) is repeatedly transmitted. For example, the repetition number field is represented by three bits;
(5) Adjustment range of a TA, which indicates a TA adjustment moment when a terminal sends data on a random access resource. For example, the adjustment range of the TA field is represented by six bits;
(6) Preamble sequence, which indicates a series of signals sent by a terminal before the terminal sends actual content (for example, valid service data) on a physical random access channel, so that a network device can effectively receive valid service data subsequently sent by the terminal;
(7) Index of the preamble sequence, which indicates the preamble sequence;
(8) Reserved information bits (reserved information bits), which indicates bits reserved for future use;
(9) Preconfigured uplink resource-radio network temporary identifier (PUR-RNTI) The NPDCCH is scrambled by the PUR-RNTI. A radio network temporary identifier (radio network temporary identifier, RNTI) is used to distinguish/identify user equipments connected in a cell, a specific radio channel, a group of user equipments in a paging case, a group of user equipments for which power control is transmitted by narrowband internet of things, and system information sent by narrowband internet of things for all user equipments.

Optionally, to align with a size requirement of an NPDCCH format, an existing NPDCCH corresponding to the random access resource has a large quantity of redundant positions. Therefore, the foregoing reserved information bits may indicate other information. With reference to FIG. 4, a new field is added to the signaling of the NPDCCH to indicate the preamble sequence (for example, the first preamble sequence or the second preamble sequence).

**Step S302:** The terminal sends the first preamble sequence or the second preamble sequence on a first random access resource.

The first random access resource is associated with a first PUR. The first PUR is an example name used to distinguish a PUR. A PUR refers to some resources configured by the network device for the terminal by using higher layer signaling when the terminal switches from a connected state to an idle state, including one or more of an MCS, a quantity of repetitions, a time-frequency resource, and the like. The first random access resource is one of N random access resources, and N is a positive integer greater than or equal to 1. The N random access resources are random access resources within a first time period before the first PUR. Optionally, the N random access resources may be random access resources indicated by the network device and configured for the terminal. Optionally, the N random access resources may be random access resources randomly selected by the terminal from the random access resources within the first time period before the first PUR. For example, there are three random access resources within the first time period, and the terminal may randomly select one random access resource from the three random access resources.

Optionally, the first message further indicates the N random access resources. Further, optionally, the N random access resources may be indicated by using activation information.

Further, optionally, if the terminal uses the first preamble sequence only before sending data on the first PUR, the network device may configure the first preamble sequence for another terminal to use on the N random access resources.

Optionally, content of the activation information may be described in detail in the following two implementations.

**Implementation 1**: The activation information indicates that the first preamble sequence can be transmitted on the random access resources within the first time period before the first PUR. Optionally, the first time period may be a time period, whose start point is nearest to the first PUR, preceding the first PUR. For example, a periodicity of the first PUR is 20 ms, the first time period is 30 ms, and activation time indicates that the first preamble sequence is transmitted on random access resources within 30 ms before the periodicity of the first PUR.

**Implementation 2**: The activation information indicates that the first preamble sequence can be transmitted on a preset quantity of random access resources before the first PUR. For example, the preset quantity is 3, and the activation time indicates that the first preamble sequence is transmitted on three random access resources before the first PUR.

**In a possible implementation,** if a timing advance command (timing advance command, TAC) will expire in a next transmission periodicity, the first preamble sequence or the second preamble sequence is sent on the first random access resource. PURs occur periodically, and the next transmission periodicity refers to a next PUR of a periodic PUR. For example, if a next PUR of the first PUR is a second PUR, the next transmission periodicity is a transmission periodicity of the second PUR.

The TAC is a TA offset fed back by the network device to the terminal based on a detection result of an uplink signal sent by the terminal, and may be used for closed-loop TA adjustment of the terminal. For example, the TAC is fed back by the network device only after the terminal sends data. When the terminal receives the TAC, validity duration of the TAC starts. If a current periodicity of the first PUR is 20 ms, and the validity duration of the TAC is 10 ms, the terminal performs a next data transmission after 20 ms, and the TAC has expired at 10 ms within the interval of 20 ms. When a new PUR can be used to send data, the TAC cannot be used. Therefore, the network device may notify the terminal in advance that the timing advance command TAC will expire in the next transmission periodicity. When a current TAC has not expired, the terminal sends the first preamble sequence or the second preamble sequence on the first random access resource. Even if the timing advance command TAC will expire in the next transmission periodicity, the terminal can also avoid falling back to a normal random access procedure, thereby reducing a fallback probability that the terminal cannot normally use a resource to transmit data due to TA expiration.

Optionally, the TAC instructs the terminal to adjust, based on a TA, a moment for sending data. For example, the TA refers to a signal sent by the network device to the terminal, based on which the terminal determines a timing advance for the terminal to send data to the network device, to compensate for a propagation delay. There is latency in signal transmission in space. For example, if a terminal moves away from a network device during a call, a signal sent by the network device will arrive at the terminal "more and more late". In this case, a signal of the terminal will also arrive at the network device "more and more late". Excessively high latency may cause a current slot during which the network device receives a signal from a terminal to overlap with a next slot during which the network device receives a signal from another terminal, resulting in inter-symbol interference. Therefore, during the call, a measurement report header sent by the terminal to the network device carries a delay value measured by the terminal, and the network device needs to monitor arrival time of the call, and send an instruction to the terminal on a downlink channel at intervals of 480 ms, to indicate time for the terminal to perform sending in advance. This time is the TA. Optionally, after the terminal sends the first preamble sequence to the network device, the network device calculates a TA offset, includes the TA offset in the TAC in a delivered response, and sends the delivered response to the terminal. Then, the terminal adjusts, based on the TAC, a TA for sending data next time. Optionally, when data is to be sent, the terminal sends the first preamble sequence or the second preamble sequence on the first random access resource. When no data is to be sent, the terminal sends the second preamble sequence on the first random access resource.

For example, because the terminal does not necessarily need to send data on all PURs, if the terminal does not need to send data on several PURs, and the network device does not need to send a feedback message to the terminal, it is very likely that validity duration of the TA for the terminal has expired within this time period. Therefore, to prevent the terminal from falling back to a normal random access procedure, the network device may configure two types of preamble sequences (for example, represented as the first preamble sequence and the second preamble sequence) for the terminal, to respectively indicate a preamble sequence sent by the terminal when data is to be sent and a preamble sequence sent by the terminal when no data is to be sent. The first preamble sequence represents that the terminal is to send valid data, reminding the network device to pay attention to receiving the valid data, so as to avoid loss of the valid data. The second preamble sequence represents that the terminal is to send empty data.

Further, optionally, the first preamble sequence is associated with an index of the first preamble sequence, and the second preamble sequence is associated with an index of the second preamble sequence. For example, the network device configures an index 0 for the first preamble sequence in advance and notifies the terminal, so that the terminal sends the first preamble sequence before data is to be sent; and configures an index 1 for the second preamble sequence, so that the terminal sends the second preamble sequence when no data is to be sent. In this manner, the network device can determine whether the preamble sequence sent by the terminal corresponds to presence of data or absence of data.

**In a possible implementation,** after sending the first preamble sequence, the terminal sends first data on the first PUR. Alternatively, after sending the second preamble sequence, the terminal does not send data on the first PUR.

Optionally, regardless of whether the terminal has data to be sent on the first PUR, the terminal sends the first preamble sequence or the second preamble sequence.

**In a possible implementation,** the first message is carried in an RRC release message.

Optionally, when configuring the first PUR in the RRC release message, the network device configures a plurality of preamble sequences for the terminal. The first message indicates the plurality of preamble sequences, the first preamble sequence or the second preamble sequence is one of the plurality of preamble sequences, and the terminal determines the first preamble sequence or the second preamble sequence from the plurality of preamble sequences. Optionally, the terminal may randomly select the first preamble sequence or the second preamble sequence from the plurality of preamble sequences, or the terminal may select the first preamble sequence or the second preamble sequence from the plurality of preamble sequences based on a preset requirement. For example, an optimal preamble sequence may be selected from five preamble sequences.

Further, optionally, the terminal receives a first indication message, where the first indication message indicates the first preamble sequence or the second preamble sequence, and the first indication message includes the index of the first preamble sequence or the index of the second preamble sequence.

For example, to align with a size requirement of an NPDCCH format, an existing NPDCCH corresponding to the PUR has a large quantity of redundant positions. Therefore, the foregoing reserved information bits may indicate other information. With reference to FIG. 4, a new field is further added to the signaling of the NPDCCH to indicate an index of the preamble sequence (for example, the index of the first preamble sequence or the index of the second preamble sequence).

Further, optionally, if the index of the first preamble sequence or the index of the second preamble sequence is a first index value, the index of the first preamble sequence or the index of the second preamble sequence indicated by the first message is an index of a most recently used preamble sequence. For example, if validity duration of the first PUR configured by the network device has expired, before the validity duration of the first PUR expires, the terminal uses a preamble sequence, and an index corresponding to the preamble sequence is 0. If validity duration of the second PUR configured by the network device has not expired, the terminal does not need to send a preamble sequence again. When validity duration of a third PUR configured by the network device expires, the terminal needs to send a preamble sequence again. In this case, an index of the used preamble sequence may be the same as an index of a last used preamble sequence, that is, the index of the preamble sequence used this time is the same as the index of the preamble sequence used for the first time (where the index of the preamble sequence sent for the first time is 0). If a TA indicated by a second message sent by the network device next time will expire in a next PUR periodicity, the terminal may determine, based on a configuration in the RRC release message by using an index of a preamble sequence indicated last time, a preamble sequence in the plurality of preamble sequences for sending.

For another example, the network device may configure a specific state for the preamble sequence used by the terminal. For example, the index of the first preamble sequence may be set to 0. Indexes of preamble sequences range from 0 to n, and different indexes of the preamble sequences indicate different quantities of repeated preamble sequences or different CP lengths. Optionally, for some indexes of the preamble sequence, each index corresponds to one preamble sequence, and the remaining indexes do not correspond to a specific preamble sequence, and only indicate to use a last used preamble sequence. For example, an index 1 corresponds to a preamble sequence 1, an index 2 corresponds to a preamble sequence 2, an index 3 corresponds to a preamble sequence 3, an index 4 corresponds to a preamble sequence 4, an index n corresponds to a preamble sequence n, but an index 0 does not correspond to any preamble sequence. Therefore, the index 0 may be used to indicate to use a last used preamble sequence. It should be understood that the foregoing is merely a possible case shown for ease of description, and is not intended to limit a specific value of the index in this embodiment of this application.

In a non-contention-based random access procedure, if an index of a preamble sequence currently used by the terminal does not need to be allocated to another terminal for use, the index of the current preamble sequence does not need to be changed. An index, for example, an index of 0, indicates that the terminal may still use the last used preamble sequence. In this way, the network device does not need to perform configuration a plurality of times. After each configuration, the preamble sequence corresponding to the index is used for sending, so that configuration overheads can be reduced. That is, when the index of the current preamble sequence is 0, it indicates that the terminal still uses the last used preamble sequence. If the index of the preamble sequence currently used by the terminal needs to be allocated to another terminal for use, the index of the current preamble sequence may need to be changed. For example, if the index of the current preamble sequence is 0, the index of the current preamble sequence may be changed to 1. That is, when the index of the current preamble sequence is in another state, it indicates that the terminal determines a corresponding preamble sequence based on indexes of different preamble sequences. In this solution, only one index needs to be configured in the control channel NPDCCH, and the index may point to any one of the plurality of preamble sequences, thereby increasing flexibility of allocating different sequences to different terminals.

Generally, the network device detects data sent by the terminal on the PUR, and then indicates an adjustment range of the TA to the terminal, so that the terminal can adjust, in a timely manner, a TA used when data is sent on the PUR next time. Because the TA is accumulated at the terminal, the adjustment range of the TA ranges from negative to positive. However, in this application, the network device detects a preamble sequence sent by the terminal before the terminal sends data, to obtain a value of the TA for feedback to achieve closed-loop adjustment, so that the terminal can adjust a TA for sending data on the PUR next time. Because an error range of the TA obtained by detecting the preamble sequence is larger, correspondingly, a range of the TA also needs to be adjusted.

**In a possible implementation,** the first message further includes the adjustment range of the TA, the adjustment range of the TA indicates a format of the TA, the adjustment range of the TA is obtained based on the TA, and the TA is determined based on the first preamble sequence or the second preamble sequence. Optionally, the format of the TA may be used by the terminal to perform next data transmission on the first PUR. For example, to align with a size requirement of an NPDCCH format, an existing NPDCCH corresponding to the PUR has a large quantity of redundant positions. Therefore, the foregoing reserved information bits may indicate other information. With reference to FIG. 4, a new field is added to the signaling of the NPDCCH to indicate the adjustment range of the TA. Optionally, for preamble sequence sending, a TA for sending the preamble sequence may be specified in a manner agreed in a protocol. For example, in an existing protocol, the TA for sending the preamble sequence is 0. The adjustment range of the TA may be described in detail in the following two cases.

**Case 1:** The adjustment range of the TA is a range greater than or equal to 0. In this case, a relatively large positive value of the TA needs to be indicated as in signaling (message, msg) 2. For example, when a TA adjustment amount is 0, it indicates that the adjustment range of the TA is not to be changed. A range of a TA adjustment amount indicated in an existing fed back NPDCCH corresponding to the PUR is smaller than a range of a TA adjustment amount that is indicated by a random access response (RAR) and that is obtained by detecting the preamble sequence. As a result, a quantity of bits in a field of the NPDCCH for indicating the TA adjustment amount is insufficient. Therefore, in the NPDCCH in the feedback message scheduled for data transmission on the first PUR, a field indicating the TA and/or the adjustment range needs to be expanded to a range greater than or equal to 0.

**Case 2:** The adjustment range of the TA is an interval ranging from a negative value to a positive value. An adjustment range of a TA indicated in a conventional technology is a fixed range. For example, an existing adjustment range of the TA is 0 ms to 10 ms. However, the adjustment range of the TA indicated in this application is a relative range that is larger and more flexible than the existing adjustment range of the TA. For example, the adjustment range of the TA indicated in this application may be 0 ms to 10 ms, or may be 0 ms to 20 ms. For example, there are four levels of indexes: 1, 2, 3, and 4. When the adjustment range of the TA is 0 ms to 10 ms, a sampling time point corresponding to the index 1 is 2.5 ms, a sampling time point corresponding to the index 2 is 5 ms, a sampling time point corresponding to the index 3 is 7.5 ms, and a sampling time point corresponding to the index 4 is 10 ms. Then, the terminal adjusts, based on the indexes, a sending moment before data sending. When the adjustment range of the TA is 0 ms to 20 ms, a sampling time point corresponding to the index 1 is 5 ms, a sampling time point corresponding to the index 2 is 10 ms, a sampling time point corresponding to the index 3 is 15 ms, and a sampling time point corresponding to the index 4 is 20 ms. Then, the terminal adjusts, based on the index, a sending moment before data sending.

If TA adjustment for sending the preamble sequence is similar to TA adjustment for sending data, and the preamble sequence is sent based on a previously accumulated TA adjustment amount, a range of a TA adjustment amount indicated in an existing fed back NPDCCH corresponding to the PUR is smaller than a range of a TA adjustment amount that is indicated by an RAR and that is obtained by detecting the preamble sequence. As a result, a quantity of bits in a field of the NPDCCH for indicating the TA adjustment amount is insufficient. Therefore, in the NPDCCH in the feedback message scheduled for data transmission on the first PUR, a field indicating the TA and/or the adjustment range needs to be expanded. In this solution, the TA is determined based on the preamble sequence, and is more accurate than that in the existing solution. Therefore, an adjustment range is larger. Therefore, the range includes a positive range and a negative range that are larger than an existing range. For example, similar to that in an RAR message, an offset is subtracted from an adjustment range of an indicated TA, so that the adjustment range of the TA may be positive or negative.

Optionally, if the terminal does not send the first preamble sequence within specific duration due to some abnormal reasons, and the TAC has expired, in this case, the terminal needs to fall back to a normal random access procedure to perform subsequent data sending.

Optionally, the network device sends the second message.

Further, optionally, the network device sends the second message to the terminal.

Correspondingly, the terminal receives the second message.

The second message indicates the timing advance TA.

Optionally, the terminal receives the second message sent by the network device only after sending the first data. Alternatively, when no data is to be sent, the second message sent by the network device is received only after the preamble sequence is sent. When the validity duration of the TA has not expired, the TA indicated by the second message may be used to retransmit data or transmit new data on the first PUR.

For a same TA, when the validity duration of the TA expires, the terminal typically falls back to a normal random access procedure. However, in this application, the terminal may send the first preamble sequence or the second preamble sequence before sending data on the first PUR, and then adjust the sending moment of the data based on the TA indicated by the second message. In this way, even if the validity duration of the TA expires, the terminal can also continue to communicate with the network device, to reduce a probability that the terminal falls back to the normal random access procedure. For a conventional technology, when the validity duration of the TA expires, the network device may not receive data from the terminal. However, in this application, the terminal sends the preamble sequence before sending data. Even if the validity duration of the TA expires, the network device can also receive the data from the terminal in a timely manner, so that the network device effectively demodulates the data.

In conclusion, according to this application, a probability of communication between the terminal and the network device can be effectively ensured.

The foregoing describes in detail the method in embodiments of this application. The following provides an apparatus in embodiments of this application.

It should be understood that division into the units in the apparatus provided in embodiments of this application is merely logical function division. In an actual implementation, all or a part of the units may be integrated into one physical entity, or may be physically separated. In addition, a unit in the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of units in the apparatus. The processor is, for example, a general-purpose processor like a central processing unit (central processing unit, CPU) or a microprocessor unit, and the memory is a memory inside the apparatus or a memory outside the apparatus.

Alternatively, a unit in the apparatus may be implemented in a form of a hardware circuit, and the hardware circuit may be designed to implement functions of a part or all of the units. The hardware circuit may be understood as one or more processors. For example, in an implementation, the hardware circuit is an application-specific integrated circuit (application-specific integrated circuit, ASIC), and a logical relationship between elements in the circuit is designed to implement functions of a part or all of the units. For another example, in another implementation, the hardware circuit may be implemented by using a programmable logic device (programmable logic device, PLD). A field programmable gate array (Field Programmable Gate Array, FPGA) is used as an example. The hardware circuit may include a large quantity of logic gate circuits, and a connection relationship between the logic gate circuits is configured based on a configuration file, to implement functions of a part or all of the units.

In embodiments of this application, the units in the apparatus may be configured as one or more processors (or processing circuits) that implement the foregoing method, for example, a CPU, graphics processing unit (graphics processing unit, GPU), a neural network processing unit (neural network processing Unit, NPU), a tensor processing unit (tensor processing unit, TPU), a deep learning processing unit (deep learning processing unit, DPU), a microprocessor unit (microprocessor unit, MPU), a digital signal processor (digital signal processor, DSP), an ASIC, an FPGA, or a combination of at least two of these processor forms.

In addition, all or a part of the units of the foregoing apparatus may be integrated together, or may be implemented independently. In an implementation, these units are integrated together, and implemented in a form of a system-on-a-chip (system-on-a-chip, SoC; also referred to as a system on chip). The SoC may include at least one processor, configured to implement any one of the foregoing methods or implement functions of units of the apparatus. Types of the at least one processor may be different. For example, the at least one processor includes a CPU and an FPGA, a CPU and an artificial intelligence processor, or a CPU and a GPU. The following lists several possible apparatuses.

FIG. 5 is a diagram of a structure of a communication apparatus 50 according to an embodiment of this application. Optionally, the communication apparatus 50 may be an independent device, for example, a terminal. Alternatively, the communication apparatus 50 may be a component, for example, a chip or an integrated circuit, in an independent device (for example, a terminal). The communication apparatus 50 is configured to implement the foregoing communication method, for example, the communication method shown in FIG. 3.

In a possible design, the communication apparatus 50 includes a communication unit 501. The communication apparatus 50 is configured to implement the foregoing communication method, for example, the communication method shown in FIG. 3. For example, the communication apparatus is configured to perform, for example, a method performed by a terminal.

In a possible implementation, the communication unit 501 is configured to receive a first message, where the first message indicates a first preamble sequence and/or a second preamble sequence. The communication unit 501 is further configured to send the first preamble sequence or the second preamble sequence on a first random access resource, where the first random access resource is associated with a first preconfigured uplink resource PUR.

In still another possible implementation, the first random access resource is one of N random access resources, the N random access resources are random access resources within a first time period before the first PUR, and N is a positive integer greater than or equal to 1.

In still another possible implementation, the sending the first preamble sequence or the second preamble sequence on the first random access resource, and the communication unit 501 is specifically configured to: if a timing advance command TAC will expire in a next transmission periodicity, send the first preamble sequence or the second preamble sequence on the first random access resource.

In still another possible implementation, the first message indicates the N random access resources.

In still another possible implementation, when data is to be sent, the first preamble sequence or the second preamble sequence is sent on the first random access resource; or when no data is to be sent, the second preamble sequence is sent on the first random access resource.

In still another possible implementation, the first message is carried in signaling of an NPDCCH or in an RRC release message.

In still another possible implementation, the first message indicates a plurality of preamble sequences, and the first preamble sequence or the second preamble sequence is one of the plurality of preamble sequences. The communication apparatus 50 further includes a processing unit 502. The processing unit 502 is configured to determine the first preamble sequence or the second preamble sequence from the plurality of preamble sequences.

In still another possible implementation, the determining the first preamble sequence or the second preamble sequence from the plurality of preamble sequences, the processing unit 502 is specifically configured to receive a first indication message, where the first indication message indicates the first preamble sequence or the second preamble sequence.

In still another possible implementation, the first indication message includes an index of the first preamble sequence or an index of the second preamble sequence. If the index of the first preamble sequence or the index of the second preamble sequence is a first index value, the first preamble sequence or the second preamble sequence indicated by the first message is a most recently used preamble sequence.

In still another possible implementation, the communication unit 501 is further configured to receive a second message, where the second message indicates a timing advance TA.

In still another possible implementation, the first message further includes an adjustment range of the TA.

This embodiment of this application and the foregoing method embodiments are based on a same concept, and bring a same technical effect. For a specific principle, refer to the descriptions of the foregoing embodiments. Details are not described again.

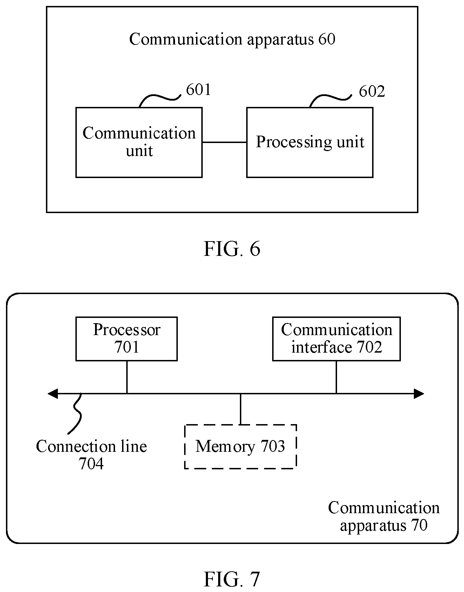

FIG. 6 is a diagram of a structure of another communication apparatus 60 according to an embodiment of this application. Optionally, the communication apparatus 60 may be an independent device, for example, a network device. Alternatively, the communication apparatus 60 may be a component, for example, a chip or an integrated circuit, in an independent device (for example, a network device). The communication apparatus 60 is configured to implement the foregoing communication method, for example, the communication method shown in FIG. 3.

In a possible design, the communication apparatus 60 includes a communication unit 601. The communication apparatus 60 is configured to implement the foregoing communication method, for example, the communication method shown in FIG. 3. For example, the communication apparatus is configured to perform, for example, a method performed by a network device.

In a possible implementation, the communication unit 601 is configured to send a first message, where the first message indicates a first preamble sequence and/or a second preamble sequence. The communication unit 601 is further configured to receive the first preamble sequence or the second preamble sequence on a first random access resource, where the first random access resource is associated with a first preconfigured uplink resource PUR.

In still another possible implementation, the first random access resource is one of N random access resources, the N random access resources are random access resources within a first time period before the first PUR, and N is a positive integer greater than or equal to 1.

In still another possible implementation, the first message indicates the N random access resources.

In still another possible implementation, when data is to be sent, the first preamble sequence or the second preamble sequence is sent on the first random access resource; or when no data is to be sent, the second preamble sequence is sent on the first random access resource.

In still another possible implementation, the first message is carried in signaling of an NPDCCH or in an RRC release message.

In still another possible implementation, the first message indicates a plurality of preamble sequences, and the first preamble sequence or the second preamble sequence is one of the plurality of preamble sequences. The communication apparatus 60 further includes a processing unit 602. The processing unit 602 is configured to send a first indication message, where the first indication message indicates the first preamble sequence or the second preamble sequence.

In still another possible implementation, the first indication message includes an index of the first preamble sequence or an index of the second preamble sequence. If the index of the first preamble sequence or the index of the second preamble sequence is a first index value, the first preamble sequence or the second preamble sequence indicated by the first message is a most recently used preamble sequence.

In still another possible implementation, the communication unit 601 is further configured to send a second message, where the second message indicates a timing advance TA, and the TA is obtained based on the first preamble sequence or the second preamble sequence.

In still another possible implementation, the first message further includes an adjustment range of the TA.

This embodiment of this application and the foregoing method embodiments are based on a same concept, and bring a same technical effect. For a specific principle, refer to the descriptions of the foregoing embodiments. Details are not described again.

FIG. 7 is a diagram of a structure of still another communication apparatus 70 according to an embodiment of this application. The communication apparatus 70 may be an independent device, for example, a terminal or a network device, or may be a component included in an independent device, for example, a chip, a software module, or an integrated circuit. The communication apparatus 70 may include at least one processor 701 and a communication interface 702. Optionally, the communication apparatus 70 may further include at least one memory 703. Further, optionally, the communication apparatus 70 may further include a connection line 704. The processor 701, the communication interface 702, and/or the memory 703 are connected through the connection line 704, and/or communicate with each other through the connection line 704, to transfer a control signal and/or a data signal.

The processor 701 is a module for performing an arithmetic operation and/or a logical operation, and may specifically include one or more of the following modules: a filter, a modem, a power amplifier, a low noise amplifier (low noise amplifier, LNA), a baseband processor, a radio frequency processor, a radio frequency circuit, a central processing unit (central processing unit, CPU), an application processor (application processor, AP), a microcontroller unit (microcontroller unit, MCU), an electronic control unit (electronic control unit, ECU), a graphics processing unit (graphics processing unit, GPU), a microprocessor unit (microprocessor unit, MPU), an application-specific integrated circuit (application-specific integrated circuit, ASIC), an image signal processor (image signal processor, ISP), a digital signal processor (digital signal processor, DSP), a field programmable gate array (field programmable gate array, FPGA), a complex programmable logic device (complex programmable logic device, CPLD), a coprocessor, or the like.

The communication interface 702 may be configured to provide an information input or output for at least one processor, or configured to receive a signal sent by the outside and/or send a signal to the outside.

For example, the communication interface 702 may include an interface circuit.

For example, the communication interface 702 may include a wired link interface such as an ethernet cable, or may also be a radio link (Wi-Fi, Bluetooth, universal wireless transmission, an onboard short-range communication technology, another short-range wireless communication technology, and the like) interface.

Optionally, the communication interface 702 may further include a radio frequency transmitter, an antenna, and the like. When the communication interface 702 includes an antenna, there may be one or more antennas.

In a possible design, if the communication apparatus 70 is an independent device, the communication interface 702 may include a receiver and a transmitter. The receiver and the transmitter may be a same component or different components. When the receiver and the transmitter are a same component, the component may be referred to as a transceiver.

In another possible design, if the communication apparatus 70 is a chip or a circuit, the communication interface 702 may include an input interface and an output interface, and the input interface and the output interface may be a same interface or different interfaces.

Optionally, a function of the communication interface 702 may be implemented through a transceiver circuit or a dedicated transceiver chip.

The memory 703 is configured to provide storage space, and the storage space may store data such as an operating system and a computer program. The memory 703 may be one or a combination of a random access memory (random access memory, RAM), a read-only memory (read-only memory, ROM), an erasable programmable read-only memory (erasable programmable read-only memory, EPROM), a compact disc read-only memory (compact disc read-only memory, CD-ROM), or the like.

Functions and actions of modules or units in the communication apparatus 70 listed above are merely examples for descriptions.

Functional units in the communication apparatus 70 may be configured to implement the foregoing communication method, for example, the communication method shown in FIG. 3, for example, configured to perform a method performed by a terminal or a network device.

Optionally, the processor 701 may be a processor (referred to as a dedicated processor for ease of differentiation) specially configured to perform the foregoing method, or may be a processor (referred to as a dedicated processor for ease of differentiation) that invokes a computer program to perform the foregoing method. Optionally, the at least one processor may alternatively include both a dedicated processor and a general-purpose processor.

Optionally, when the communication apparatus 70 includes the at least one memory 703, if the processor 701 implements the foregoing communication method by invoking a computer program, the computer program may be stored in the memory 703.

An embodiment of this application further provides a chip. The chip includes a logic circuit and a communication interface. The communication interface is configured to receive a signal or send a signal, and the logic circuit is configured to receive a signal or send a signal through the communication interface. The chip is configured to implement the foregoing communication method, for example, the communication method shown in FIG. 3.

An embodiment of this application further provides a computer-readable storage medium. The computer-readable storage medium stores instructions. When the instructions are run on at least one processor (or communication apparatus), the foregoing communication method is implemented, for example, the communication method shown in FIG. 3.

An embodiment of this application further provides a computer program product. The computer program product includes computer instructions. The computer instructions are used to implement the foregoing communication method, for example, the communication method shown in FIG. 3.

It should be noted that, in embodiments of this application, terms such as "example" or "for example" are used to represent giving an example, an illustration, or a description. Any embodiment or design scheme described as an "example" or "for example" in this application should not be explained as being more preferred or having more advantages than another embodiment or design scheme. Exactly, use of the terms such as "example" or "for example" is intended to present a related concept in a specific manner.

In embodiments of this application, "at least one" means one or more, and "a plurality of" means two or more. "At least one of the following items (pieces)" or a similar expression thereof indicates any combination of these items, including a single item (piece) or any combination of a plurality of items (pieces).

For example, at least one of a, b, or c may indicate: a, b, c, (a and b), (a and c), (b and c), or (a, b, and c), where a, b, and c may be singular or plural. The term "and/or" describes an association relationship between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects.

In addition, unless otherwise specified, ordinal numbers such as "first" and "second" in embodiments of this application are used to distinguish between a plurality of objects, but are not intended to limit an order, a time sequence, priorities, or importance degrees of the plurality of objects. For another example, a first node and a second node are merely for ease of describing fresh parameters in different implementations, and do not represent differences in performed operations, importance degrees, structures, and the like.

As used in the foregoing embodiments, based on the context, the term "when..." may be interpreted as a meaning of "if...", "before...", "determine...", or "detect...". The foregoing descriptions are merely optional embodiments of this application, but are not intended to limit this application. Any modification, equivalent replacement, improvement, or the like made within the concept and principle of this application shall fall within the protection scope of this application.

A person of ordinary skill in the art may understand that all or some of the steps of embodiments may be implemented by using hardware or a program instructing related hardware. The program may be stored in a computer-readable storage medium. The foregoing storage medium may be a read-only memory, a magnetic disk, an optical disc, or the like.

## Claims

1. A communication method, wherein the method comprises:
receiving a first message, wherein the first message indicates a first preamble sequence and/or a second preamble sequence; and
sending the first preamble sequence or the second preamble sequence on a first random access resource, wherein the first random access resource is associated with a first preconfigured uplink resource PUR.

2. The method according to claim 1, wherein
the first random access resource is one of N random access resources, the N random access resources are random access resources within a first time period before the first PUR, and N is a positive integer greater than or equal to 1.

3. The method according to claim 1 or 2, wherein the sending the first preamble sequence or the second preamble sequence on the first random access resource comprises:
if a timing advance command TAC will expire in a next transmission periodicity, sending the first preamble sequence or the second preamble sequence on the first random access resource.

4. The method according to any one of claims 1 to 3, wherein the first message indicates the N random access resources.

5. The method according to any one of claims 1 to 4, wherein
when data is to be sent, sending the first preamble sequence or the second preamble sequence on the first random access resource; or
when no data is to be sent, sending the second preamble sequence on the first random access resource.

6. The method according to any one of claims 1 to 5, wherein
the first message is carried in signaling of a narrowband physical downlink control channel NPDCCH or in a radio resource control RRC release message.

7. The method according to any one of claims 1 to 6, wherein the first message indicates a plurality of preamble sequences, and the first preamble sequence or the second preamble sequence is one of the plurality of preamble sequences; and
the method further comprises:
determining the first preamble sequence or the second preamble sequence from the plurality of preamble sequences.

8. The method according to claim 7, wherein the determining the first preamble sequence or the second preamble sequence from the plurality of preamble sequences comprises:
receiving a first indication message, wherein the first indication message indicates the first preamble sequence or the second preamble sequence.

9. The method according to claim 8, wherein the first indication message comprises an index of the first preamble sequence or an index of the second preamble sequence, and
if the index of the first preamble sequence or the index of the second preamble sequence is a first index value, the first preamble sequence or the second preamble sequence indicated by the first message is a most recently used preamble sequence.

10. The method according to any one of claims 1 to 9, wherein the method further comprises:
receiving a second message, wherein the second message indicates a timing advance TA.

11. The method according to any one of claims 1 to 10, wherein
the first message further comprises an adjustment range of the TA.

12. A communication method, wherein the method comprises:
sending a first message, wherein the first message indicates a first preamble sequence and/or a second preamble sequence; and
receiving the first preamble sequence or the second preamble sequence on a first random access resource, wherein the first random access resource is associated with a first preconfigured uplink resource PUR.

13. The method according to claim 12, wherein
the first random access resource is one of N random access resources, the N random access resources are random access resources within a first time period before the first PUR, and N is a positive integer greater than or equal to 1.

14. The method according to claim 12 or 13, wherein the first message indicates the N random access resources.

15. The method according to any one of claims 12 to 14, wherein
the first preamble sequence is used when data is to be sent, and the second preamble sequence is used when no data is to be sent.

16. The method according to any one of claims 12 to 15, wherein
the first message is carried in signaling of a narrowband physical downlink control channel NPDCCH or in a radio resource control RRC release message.

17. The method according to any one of claims 12 to 16, wherein the first message indicates a plurality of preamble sequences, and the first preamble sequence or the second preamble sequence is one of the plurality of preamble sequences; and
the method further comprises:
sending a first indication message, wherein the first indication message indicates the first preamble sequence or the second preamble sequence.

18. The method according to claim 17, wherein the first indication message comprises an index of the first preamble sequence or an index of the second preamble sequence, and
if the index of the first preamble sequence or the index of the second preamble sequence is a first index value, the first preamble sequence or the second preamble sequence indicated by the first message is a most recently used preamble sequence.

19. The method according to any one of claims 12 to 18, wherein the method further comprises:
sending a second message, wherein the second message indicates a timing advance TA, and the TA is obtained based on the first preamble sequence or the second preamble sequence.

20. The method according to any one of claims 12 to 19, wherein
the first message further comprises an adjustment range of the TA.

21. A communication apparatus, wherein the communication apparatus comprises a module configured to implement the method according to any one of claims 1 to 11.

22. A communication apparatus, wherein the communication apparatus comprises a module configured to implement the method according to any one of claims 12 to 20.

23. A communication apparatus, wherein the communication apparatus comprises a processor, and
when the processor invokes a computer program or instructions in a memory, the method according to any one of claims 1 to 11 is implemented.

24. A communication apparatus, wherein the communication apparatus comprises a processor, and
when the processor invokes a computer program or instructions in a memory, the method according to any one of claims 12 to 20 is implemented.

25. A communication apparatus, comprising a logic circuit and an interface, wherein the logic circuit is coupled to the interface,
the interface is configured to input and/or output information, and the logic circuit is configured to perform the method according to any one of claims 1 to 20.

26. The apparatus according to claim 25, wherein the communication apparatus is a chip or a chip system.

27. A communication system, wherein the communication system comprises the communication apparatus according to claim 21 and the communication apparatus according to claim 22; or
the communication system comprises the communication apparatus according to claim 23 and the communication apparatus according to claim 24.

28. A computer-readable storage medium, wherein the computer-readable storage medium is configured to store instructions or a computer program, and
when the instructions or the computer program is executed, the method according to any one of claims 1 to 20 is implemented.

29. A computer program product, comprising instructions or a computer program, wherein
when the instructions or the computer program is executed, the method according to any one of claims 1 to 20 is implemented.
